# EUROPEAN PATENT SPECIFICATION

(11) **EP 4 300 144 B1**
(45) Date of publication and mention of the grant of the patent: **03.12.2025**
(21) Application number: 23175450.8
(22) Date of filing: 25.05.2023
(51) Int. Cl.: G02F 1/295, G02B 5/18, G02B 27/00, G02B 27/01, G02B 27/28

(54) **DISPLAY SYSTEM FOR PRODUCING A HOLOGRAPHIC HEAD-UP DISPLAY IMAGE**
ANZEIGESYSTEM ZUR ERZEUGUNG EINES HOLOGRAPHISCHEN HEAD-UP-DISPLAYS
SYSTÈME D'AFFICHAGE PERMETTANT DE PRODUIRE UNE IMAGE D'AFFICHAGE TÊTE HAUTE HOLOGRAPHIQUE

(30) Priority: 28.06.2022 GB 202209439
(43) Date of publication of application: 03.01.2024
(73) Proprietor: Envisics Ltd., Milton Keynes MK1 1PT (GB)
(72) Inventor: CHRISTMAS, Jamieson, Milton Keynes MK1 1PT (GB); COLLINGS, Neil, Milton Keynes MK1 1PT (GB); KRAWCZYK, Celedonia, Milton Keynes MK1 1PT (GB); SMEETON, Timothy, Milton Keynes MK1 1PT (GB)
(74) Representative: Greenaway, Martin William

(56) References cited:
- EP-A2- 2 012 173
- WO-A1-2021/230856
- US-A1- 2020 150 324
- US-A1- 2022 179 197

## Description

### FIELD

The present disclosure relates to light turning elements. More specifically, the present disclosure relates to light turning elements comprising a layer of liquid crystal material. The present disclosure further relates to methods of fabricating light turning elements.

### BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micro-mirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD".

EP2012173A2 discloses a polarization-selective diffractive optical element that includes a liquid crystal polymer film supported by a substrate. WO2021/230856A1 discloses an eyewear device including a lightguide having a world-side surface and an eye-side surface, a display oriented to emit light toward the lightguide, and a beam steering element that includes a first polarization grating positioned along an optical path between the display. As such, WO 2021/230856 A1 discloses a display system configured to produce a head-up display image, the display system comprising a light source arranged to output a light field corresponding to a head-up display image, anda light guide assembly comprising a waveguide, and a light turning element (beam steering element) comprising a layer of liquid crystal material (achromatic LC polarization grating), the layer of liquid crystal material defining a plane, the layer of liquid crystal material configured such that an angle between a director of the liquid crystal material and a first dimension changes as a function of position in the first dimension, wherein the first dimension is a dimension within the plane, wherein the light turning element is coupled to a major surface of the waveguide and the light turning element is configured to change a propagation direction of a light field received from the waveguide, and wherein the light guide assembly is arranged to receive the light field from the light source.

US2020/150324A1 discloses optical beam steering and focusing systems, devices, and methods that utilize diffractive waveplates. US2022/179197A1 discloses a light deflection device and an optical device having a simple structure suitable for reducing the size and weight where a deflection angle can be increased.

### SUMMARY

Aspects of the present invention are defined in the appended independent claims.

In a first aspect, there is provided a display system configured to produce a holographic head-up display image, the display system comprising among others a light turning element configured to turn a propagation path of a light ray from a light source by a turning angle as the light ray propagates through the light turning element. The light turning element comprises a layer of liquid crystal material. The layer of liquid crystal material defines a plane. The layer of liquid crystal material is configured such that an angle between a director of the liquid crystal material and a first dimension changes as function of position in the first dimension. In some embodiments, the angle between the director and the liquid crystal may increase or decrease as a function of distance in the first dimension. In some embodiments, the angle between the director of the liquid crystal and the first dimension is an oscillating function of position in the first dimension. The first dimension is a dimension within the plane.

An advantage provided by such a light turning element is that dark bands in the light field propagating through the light turning element tend to be reduced or avoided. Conventional turning films tend to have a passive facet which blocks some of the light passing through thereby causing dark bands to occur. Another advantage provided by the light turning element is that the light turning element is relatively flat compared to conventional turning films allowing for better attachment/positioning on flat surfaces, e.g. on planar components housed within the dashboard of cars. Conventional turning films tend to have a serrated/sawtooth surface which can also increase the volume taken up by the turning film. Another advantage provided by the light turning element is that the use of liquid crystal materials tends to provide for a greater range of turning angles compared to conventional turning films. Another advantage provided by the light turning element is that the angle turned by a light field propagating through the light turning element may be more easily tuned or modified due to the use of the liquid crystal material.

In some embodiments, the angle between the director of the liquid crystal material and a first dimension may be vary between being zero degrees and 90 degrees in the first dimension. Thus, the director of the liquid crystal material may vary between being parallel to the first dimension and perpendicular to the first dimension. The director of the liquid crystal material may be parallel to the first dimension at a first position in the first dimension. The director of the liquid crystal material may be perpendicular to the first dimension at a second position in the first dimension. Between the first and second positions, in the first dimension, the angle between the director of the liquid crystal material and the first dimension may increase or decrease with distance in the first dimension. The increase or decrease in angle may be substantially continuous. In some embodiments, the first position may be at a first end of the light turning element / liquid crystal material. The second position may be at a second end of the light turning element / liquid crystal material. In some embodiments, the director of the liquid crystal material may repeatedly or periodically vary from being perpendicular to the first dimension and parallel to the first dimension. The oscillating function may be a periodic function. This advantageously tends to improve the consistency in the angle turned by a light field travelling through the light turning element.

The period of the periodic function may be between 5 and 5000 microns, such as between 5 and 500 microns, or between 5 and 50 microns.

The periodic function may be a function selected from the group of functions consisting of a sawtooth function, a square function, a triangle function, and a trigonometric function.

The size of the layer of liquid crystal material in a direction that is perpendicular to the plane of the layer of liquid crystal material may be between 10 and 5000 microns, such as between 10 and 1000 microns or between 10 and 500 microns.

The birefringence of the liquid crystal material may be between 0.10 and 0.40, such as between 0.20 and 0.30.

The liquid crystal material of the light turning element may be substantially secured or fixed or frozen in place. In other words, the liquid crystal material of the light turning element may be non-moveable (for example, the liquid crystal may be permanently fixed according to the oscillating function of position in the first dimension). In some embodiments, the light turning element comprises a photoalignment material, for example a layer of photoalignment material. The (layer of) photoalignment material may be in contact with the liquid crystal material. The photoalignment material may be arranged to maintain the liquid crystal in position.

The light turning element may further comprise a polymer matrix interspersed with the layer of liquid crystal material. Advantageously, the polymer matrix tends to freeze the orientation of the molecules of the liquid crystal material. This means that the orientation of the molecules is less likely to change from external stimuli, e.g. an increase in temperature. The polymer matrix may be more rigid than the liquid crystal material. The polymer matrix may comprise a plurality of cavities. The liquid crystal material may be located within the cavities thereby freezing the orientation of molecules of the liquid crystal material. The cavities may be shaped such that the liquid crystal material located within the cavities has an angle between a director of that liquid crystal material and the first dimension that is an oscillating function of position in the first dimension.

The refractive index of the layer of liquid crystal material may oscillate along the first dimension. The refractive index may be defined in a direction parallel to the electric field vector of the incident light beam.

The display system configured to produce a holographic head-up display image is further provided a light guide assembly. The light guide assembly comprises a waveguide and the light tuning element according to the above-described aspect coupled to a major surface of the waveguide. The light turning element is configured to change a propagation direction of a light field received from the waveguide. The waveguide may be a planar waveguide.

The light turning element is disposed the major surface.

The light field comprises coherent light. The light field corresponds to a hologram of an image for display. The light field may comprise a plurality of hologram channels. Each hologram channel may correspond to a sub-area of the image. The display system configured to produce a holographic head-up display image further comprises a light source and the above described light guide assembly arranged to receive light from the light source.

The display system is configured to produce a holographic head-up-display (HUD) image. Advantageously, the reduction or avoidance of dark bands arising from the light field propagating through the light turning element is particularly useful in holographic HUDs in which the holographic light field is propagated to the eye (not an image) and the image content is divided into discrete hologram channels.

The light turning element may be configured to direct principal rays of the light field to a centre of an eye-box of the display system.

In an unclaimed aspect, a method of fabricating a light turning element is provided. The method comprises providing a first substrate; depositing a photoalignment material on a surface of the first substrate; irradiating the photoalignment material with electromagnetic radiation; and depositing a layer of liquid crystal material on the irradiated photoalignment material. The layer of liquid crystal material defines a plane. The irradiated photoalignment material configures the layer of liquid crystal material deposited thereon such that an angle between a director of the liquid crystal material and a first dimension changes as a function of position in the first dimension. In some embodiments, the angle between the director and the first dimension is an oscillating function of position in the first dimension. The first dimension is a dimension within the plane. Such an arrangement of the liquid crystal material may have a refractive index that oscillates along the first dimension.

The electromagnetic radiation may have a polarization angle that varies across a surface of the photoalignment material in accordance with the oscillating function.

The irradiation of the photoalignment material may comprise: irradiating a first portion of the photoalignment material with electromagnetic radiation having a first polarization angle such that the director of the liquid crystal material deposited on the irradiated first portion makes a first angle with the first dimension; and irradiating a second portion of the photoalignment material on the surface of the first substrate with electromagnetic radiation having a second polarization angle different to the first polarization angle such that the director of the liquid crystal material deposited on the irradiated second portion makes a second angle with the first dimension, the second angle being different to the first angle.

The irradiation of the photoalignment material may further comprise irradiating a third portion of the photoalignment material with electromagnetic radiation having the first polarization angle such that the director of the liquid crystal material deposited on the irradiated third portion makes the first angle with the first dimension.

The irradiation of the photoalignment material may further comprise irradiating a fourth portion of the photoalignment material on the surface of the first substrate with electromagnetic radiation having the second polarization angle such that the director of the liquid crystal material deposited on the irradiated fourth portion makes the second angle with the first dimension.

The irradiation of the photoalignment material may further comprise positioning respective photomasks over each portion of the photoalignment material before irradiation of that portion of the photoalignment material.

The method may further comprise providing a second substrate having an irradiated photoalignment material that corresponds to the irradiated photoalignment material on the first substrate, and attaching the first and second substrates such that the liquid crystal material is between the irradiated photoalignment materials of the first and second substrates.

In the present disclosure, the term "replica" is used herein with respect to waveguides such as waveguide pupil expanders to reflect that spatially modulated light is divided such that a complex light field is directed along a plurality of different optical paths. The word "replica" is used to refer to each occurrence or instance of the complex light field after a replication event - such as a partial reflection-transmission by a pupil expander. Each replica travels along a different optical path. Some embodiments of the present disclosure relate to propagation of light that is encoded with a hologram, not an image - i.e., light that is spatially modulated with a hologram of an image, not the image itself. It may therefore be said that a plurality of replicas of the hologram are formed. The person skilled in the art of holography will appreciate that the complex light field associated with propagation of light encoded with a hologram will change with propagation distance. Use herein of the term "replica" is independent of propagation distance and so the two branches or paths of light associated with a replication event are still referred to as "replicas" of each other even if the branches are a different length, such that the complex light field has evolved differently along each path. That is, two complex light fields are still considered "replicas" in accordance with this disclosure even if they are associated with different propagation distances - providing they have arisen from the same replication event or series of replication events.

A "diffracted light field" or "diffractive light field" in accordance with this disclosure is a light field formed by diffraction. A diffracted light field may be formed by illuminating a corresponding diffractive pattern. In accordance with this disclosure, an example of a diffractive pattern is a hologram and an example of a diffracted light field is a holographic light field or a light field forming a holographic reconstruction of an image. The holographic light field forms a (holographic) reconstruction of an image on a replay plane. The holographic light field that propagates from the hologram to the replay plane may be said to comprise light encoded with the hologram or light in the hologram domain. A diffracted light field is characterized by a diffraction angle determined by the smallest feature size of the diffractive structure and the wavelength of the light (of the diffracted light field). In accordance with this disclosure, it may also be said that a "diffracted light field" is a light field that forms a reconstruction on a plane spatially separated from the corresponding diffractive structure. An optical system is disclosed herein for propagating a diffracted light field from a diffractive structure to a viewer. The diffracted light field may form an image.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of a spatial light modulator (SLM) with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality may be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude *and* phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to 2π) which represents the amount of phase retardation provided by that pixel. For example, a pixel of the spatial light modulator described as having a phase value of π/2 will retard the phase of received light by π/2 radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values.

The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

### BRIEF DESCRIPTION OF THE DRAWINGS

Specific embodiments are described by way of example only with reference to the following figures:
Figure 1 is a schematic illustration (not to scale) showing a reflective SLM producing a holographic reconstruction on a screen;
Figure 2 is a schematic illustration (not to scale) showing an image for projection comprising eight image areas/components and cross-sections of the corresponding hologram channels;
Figure 3 is a schematic illustration (not to scale) showing a hologram displayed on a liquid crystal on silicon device that directs light into a plurality of discrete areas;
Figure 4 is a schematic illustration (not to scale) showing a system, including a display device that displays a hologram that has been calculated as illustrated in Figures 2 and 3;
Figure 5 is a schematic illustration (not to scale) showing a perspective view of a first example two-dimensional pupil expander comprising two replicators;
Figure 6 is a schematic illustration (not to scale) showing a perspective view of a HUD projecting an image on an eye-box;
Figure 7 is a schematic illustration (not to scale) of a conventional light turning element;
Figure 8 is a schematic illustration (not to scale) of a light turning element; and
Figure 9 is a schematic illustration (not to scale) showing an effective turning film prism.

The same reference numbers will be used throughout the drawings to refer to the same or like parts.

### DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in co-dependent relationship.

In the present disclosure, the term "substantially" when applied to a structural units of an apparatus may be interpreted as the technical feature of the structural units being produced within the technical tolerance of the method used to manufacture it.

### Conventional optical configuration for holographic projection

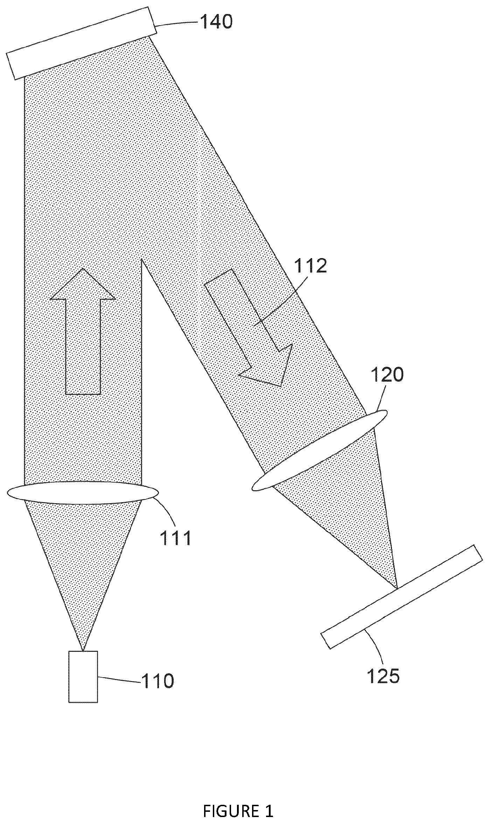

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not* a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens may act as a Fourier transform lens but the performance of the lens will limit the accuracy of the Fourier transform it performs. The skilled person understands how to use a lens to perform an optical Fourier transform. In some embodiments of the present disclosure, the lens of the viewer's eye performs the hologram to image transformation.

### Hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms. Embodiments relate to Fourier holography and Gerchberg-Saxton type algorithms by way of example only. The present disclosure is equally applicable to Fresnel holography and Fresnel holograms which may be calculated by a similar method. In some embodiments, the hologram is a phase or phase-only hologram. However, the present disclosure is also applicable to holograms calculated by other techniques such as those based on point cloud methods.

In some embodiments, the hologram engine is arranged to exclude from the hologram calculation the contribution of light blocked by a limiting aperture of the display system. British patent application GB2101666.2, filed 5 February 2021 and incorporated herein by reference, discloses a first hologram calculation method in which eye-tracking and ray tracing are used to identify a sub-area of the display device for calculation of a point cloud hologram which eliminates ghost images. The sub-area of the display device corresponds with the aperture, of the present disclosure, and is used exclude light paths from the hologram calculation. British patent application GB2112213.0, filed 26 August 2021 and incorporated herein by reference, discloses a second method based on a modified Gerchberg-Saxton type algorithm which includes steps of light field cropping in accordance with pupils of the optical system during hologram calculation. The cropping of the light field corresponds with the determination of a limiting aperture of the present disclosure. British patent application GB2118911.3, filed 23 December 2021 and also incorporated herein by reference, discloses a third method of calculating a hologram which includes a step of determining a region of a so-called extended modulator formed by a hologram replicator. The region of the extended modulator is also an aperture in accordance with this disclosure.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

### Large field of view using small display device

Broadly, the present disclosure relates to image projection. It relates to a method of image projection and an image projector which comprises a display device. The present disclosure also relates to a projection system comprising the image projector and a viewing system, in which the image projector projects or relays light from the display device to the viewing system. The present disclosure is equally applicable to a monocular and binocular viewing system. The viewing system may comprise a viewer's eye or eyes. The viewing system comprises an optical element having optical power (e.g., lens/es of the human eye) and a viewing plane (e.g., retina of the human eye/s). The projector may be referred to as a 'light engine'. The display device and the image formed (or perceived) using the display device are spatially separated from one another. The image is formed, or perceived by a viewer, on a display plane. In some embodiments, the image is a virtual image and the display plane may be referred to as a virtual image plane. In other examples, the image is a real image formed by holographic reconstruction and the image is projected or relayed to the viewing plane. In these other examples, spatially modulated light of an intermediate holographic reconstruction formed either in free space or on a screen or other light receiving surface between the display device and the viewer, is propagated to the viewer. In both cases, an image is formed by illuminating a diffractive pattern (e.g., hologram or kinoform) displayed on the display device.

The display device comprises pixels. The pixels of the display may display a diffractive pattern or structure that diffracts light. The diffracted light may form an image at a plane spatially separated from the display device. In accordance with well-understood optics, the magnitude of the maximum diffraction angle is determined by the size of the pixels and other factors such as the wavelength of the light.

In embodiments, the display device is a spatial light modulator such as liquid crystal on silicon ("LCOS") spatial light modulator (SLM). Light propagates over a range of diffraction angles (for example, from zero to the maximum diffractive angle) from the LCOS, towards a viewing entity/system such as a camera or an eye. In some embodiments, magnification techniques may be used to increase the range of available diffraction angles beyond the conventional maximum diffraction angle of an LCOS.

In some embodiments, the (light of a) hologram itself is propagated to the eyes. For example, spatially modulated light of the hologram (that has not yet been fully transformed to a holographic reconstruction, i.e. image) - that may be informally said to be "encoded" with/by the hologram - is propagated directly to the viewer's eyes. A real or virtual image may be perceived by the viewer. In these embodiments, there is no intermediate holographic reconstruction / image formed between the display device and the viewer. It is sometimes said that, in these embodiments, the lens of the eye performs a hologram-to-image conversion or transform. The projection system, or light engine, may be configured so that the viewer effectively looks directly at the display device.

Reference is made herein to a "light field" which is a "complex light field". The term "light field" merely indicates a pattern of light having a finite size in at least two orthogonal spatial directions, e.g. x and y. The word "complex" is used herein merely to indicate that the light at each point in the light field may be defined by an amplitude value and a phase value, and may therefore be represented by a complex number or a pair of values. For the purpose of hologram calculation, the complex light field may be a two-dimensional array of complex numbers, wherein the complex numbers define the light intensity and phase at a plurality of discrete locations within the light field.

In accordance with the principles of well-understood optics, the range of angles of light propagating from a display device that can be viewed, by an eye or other viewing entity/system, varies with the distance between the display device and the viewing entity. At a 1 metre viewing distance, for example, only a small range of angles from an LCOS can propagate through an eye's pupil to form an image at the retina for a given eye position. The range of angles of light rays that are propagated from the display device, which can successfully propagate through an eye's pupil to form an image at the retina for a given eye position, determines the portion of the image that is 'visible' to the viewer. In other words, not all parts of the image are visible from any one point on the viewing plane (e.g., any one eye position within a viewing window such as eye-box.)

In some embodiments, the image perceived by a viewer is a virtual image that appears upstream of the display device - that is, the viewer perceives the image as being further away from them than the display device. Conceptually, it may therefore be considered that the viewer is looking at a virtual image through an 'display device-sized window', which may be very small, for example 1cm in diameter, at a relatively large distance, e.g., 1 metre. And the user will be viewing the display device-sized window via the pupil(s) of their eye(s), which can also be very small. Accordingly, the field of view becomes small and the specific angular range that can be seen depends heavily on the eye position, at any given time.

A pupil expander addresses the problem of how to increase the range of angles of light rays that are propagated from the display device that can successfully propagate through an eye's pupil to form an image. The display device is generally (in relative terms) small and the projection distance is (in relative terms) large. In some embodiments, the projection distance is at least one - such as, at least two - orders of magnitude greater than the diameter, or width, of the entrance pupil and/or aperture of the display device (i.e., size of the array of pixels).

Use of a pupil expander increases the viewing area (i.e., user's eye-box) laterally, thus enabling some movement of the eye/s to occur, whilst still enabling the user to see the image. As the skilled person will appreciate, in an imaging system, the viewing area (user's eye box) is the area in which a viewer's eyes can perceive the image. The present disclosure encompasses non-infinite virtual image distances - that is, near-field virtual images.

Conventionally, a two-dimensional pupil expander comprises one or more one-dimensional optical waveguides each formed using a pair of opposing reflective surfaces, in which the output light from a surface forms a viewing window or eye-box. Light received from the display device (e.g., spatially modulated light from a LCOS) is replicated by the or each waveguide so as to increase the field of view (or viewing area) in at least one dimension. In particular, the waveguide enlarges the viewing window due to the generation of extra rays or "replicas" by division of amplitude of the incident wavefront.

The display device may have an active or display area having a first dimension that may be less than 10 cm such as less than 5 cm or less than 2 cm. The propagation distance between the display device and viewing system may be greater than 1 m such as greater than 1.5 m or greater than 2 m. The optical propagation distance within the waveguide may be up to 2 m such as up to 1.5 m or up to 1 m. The method may be capable of receiving an image and determining a corresponding hologram of sufficient quality in less than 20 ms such as less than 15 ms or less than 10 ms.

In some embodiments - described only by way of example of a diffracted or holographic light field in accordance with this disclosure - a hologram is configured to route light into a plurality of channels, each channel corresponding to a different part (i.e. sub-area) of an image. The channels formed by the diffractive structure are referred to herein as "hologram channels" merely to reflect that they are channels of light encoded by the hologram with image information. It may be said that the light of each channel is in the hologram domain rather than the image or spatial domain. In some embodiments, the hologram is a Fourier or Fourier transform hologram and the hologram domain is therefore the Fourier or frequency domain. The hologram may equally be a Fresnel or Fresnel transform hologram. The hologram may also be a point cloud hologram. The hologram is described herein as routing light into a plurality of hologram channels to reflect that the image that can be reconstructed from the hologram has a finite size and can be arbitrarily divided into a plurality of image sub-areas, wherein each hologram channel would correspond to each image sub-area. Importantly, the hologram of this example is characterised by how it distributes the image content when illuminated. Specifically and uniquely, the hologram divides the image content by angle. That is, each point on the image is associated with a unique light ray angle in the spatially modulated light formed by the hologram when illuminated - at least, a unique pair of angles because the hologram is two-dimensional. For the avoidance of doubt, this hologram behaviour is not conventional. The spatially modulated light formed by this special type of hologram, when illuminated, may be divided into a plurality of hologram channels, wherein each hologram channel is defined by a range of light ray angles (in two-dimensions). It will be understood from the foregoing that any hologram channel (i.e. sub-range of light ray angles) that may be considered in the spatially modulated light will be associated with a respective part or sub-area of the image. That is, all the information needed to reconstruct that part or sub-area of the image is contained within a sub-range of angles of the spatially modulated light formed from the hologram of the image. When the spatially modulated light is observed as a whole, there is not necessarily any evidence of a plurality of discrete light channels.

Nevertheless, the hologram may still be identified. For example, if only a continuous part or sub-area of the spatially modulated light formed by the hologram is reconstructed, only a sub-area of the image should be visible. If a different, continuous part or sub-area of the spatially modulated light is reconstructed, a different sub-area of the image should be visible. A further identifying feature of this type of hologram is that the shape of the cross-sectional area of any hologram channel substantially corresponds to (i.e. is substantially the same as) the shape of the entrance pupil although the size may be different - at least, at the correct plane for which the hologram was calculated. Each light / hologram channel propagates from the hologram at a different angle or range of angles. Whilst these are example ways of characterising or identifying this type of hologram, other ways may be used. In summary, the hologram disclosed herein is characterised and identifiable by how the image content is distributed within light encoded by the hologram. Again, for the avoidance of any doubt, reference herein to a hologram configured to direct light or angularly-divide an image into a plurality of hologram channels is made by way of example only and the present disclosure is equally applicable to pupil expansion of any type of holographic light field or even any type of diffractive or diffracted light field.

The system can be provided in a compact and streamlined physical form. This enables the system to be suitable for a broad range of real-world applications, including those for which space is limited and real-estate value is high. For example, it may be implemented in a head-up display (HUD) such as a vehicle or automotive HUD.

In accordance with the present disclosure, pupil expansion is provided for diffracted or diffractive light, which may comprise diverging ray bundles. The diffracted light field may be defined by a "light cone". Thus, the size of the diffracted light field (as defined on a two-dimensional plane) increases with propagation distance from the corresponding diffractive structure (i.e. display device). It can be said that the pupil expander/s replicate the hologram or form at least one replica of the hologram, to convey that the light delivered to the viewer is spatially modulated in accordance with a hologram.

In some embodiments, two one-dimensional waveguide pupil expanders are provided, each one-dimensional waveguide pupil expander being arranged to effectively increase the size of the exit pupil of the system by forming a plurality of replicas or copies of the exit pupil (or light of the exit pupil) of the spatial light modulator. The exit pupil may be understood to be the physical area from which light is output by the system. It may also be said that each waveguide pupil expander is arranged to expand the size of the exit pupil of the system. It may also be said that each waveguide pupil expander is arranged to expand/increase the size of the eye box within which a viewer's eye can be located, in order to see/receive light that is output by the system.

### Light channelling

The hologram formed in accordance with some embodiments, angularly-divides the image content to provide a plurality of hologram channels which may have a cross-sectional shape defined by an aperture of the optical system. The hologram is calculated to provide this channelling of the diffracted light field. In some embodiments, this is achieved during hologram calculation by considering an aperture (virtual or real) of the optical system, as described above.

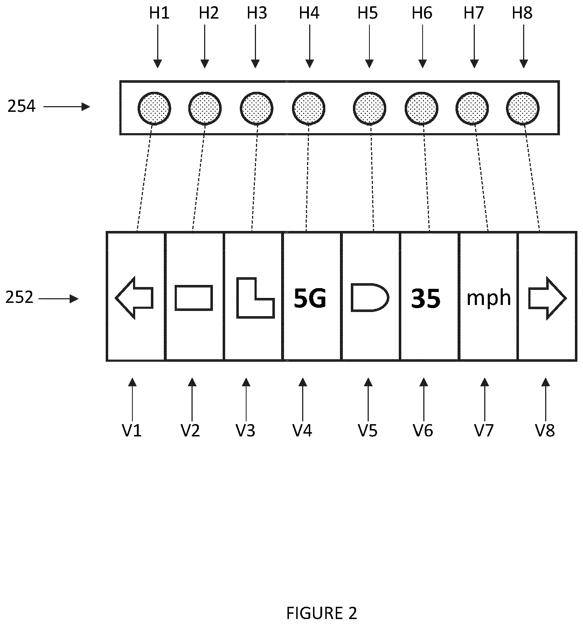

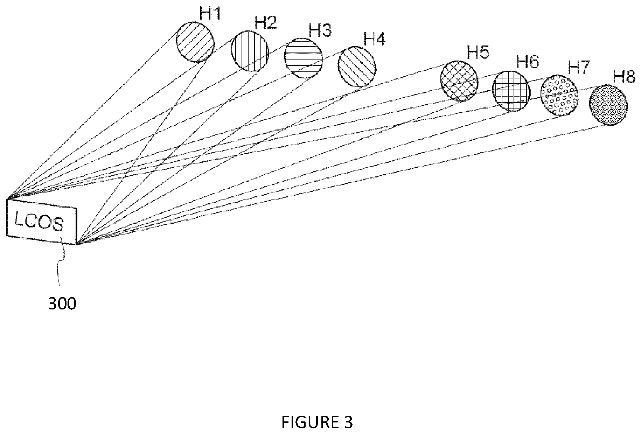

Figures 2 and 3 show an example of this type of hologram that may be used in conjunction with a pupil expander as disclosed herein. However, this example should not be regarded as limiting with respect to the present disclosure.

Figure 2 shows an image 252 for projection comprising eight image areas/components, V1 to V8. Figure 2 shows eight image components by way of example only and the image 252 may be divided into any number of components. Figure 2 also shows an encoded light pattern 254 (i.e., hologram) that can reconstruct the image 252 - e.g., when transformed by the lens of a suitable viewing system. The encoded light pattern 254 comprises first to eighth sub-holograms or components, H1 to H8, corresponding to the first to eighth image components/areas, V1 to V8. Figure 2 further shows how a hologram may decompose the image content by angle. The hologram may therefore be characterised by the channelling of light that it performs. This is illustrated in Figure 3. Specifically, the hologram in this example directs light into a plurality of discrete areas by an LCOS 300. The discrete areas are discs H1 to H8 in the example shown but other shapes are envisaged. The size and shape of the optimum disc may, after propagation through the waveguide, be related to the size and shape of an aperture of the optical system such as the entrance pupil of the viewing system.

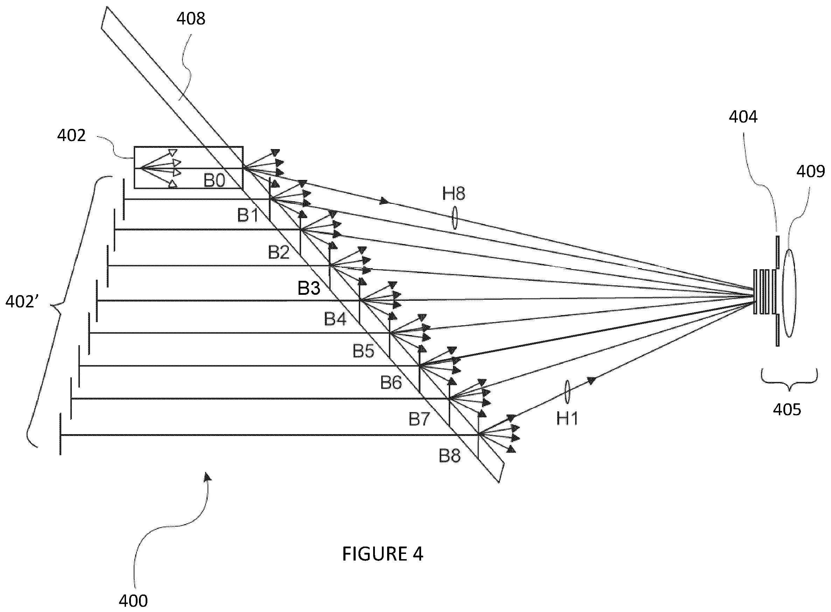

Figure 4 shows a system 400, including a display device that displays a hologram that has been calculated as illustrated in Figures 2 and 3.

The system 400 comprises a display device, which in this arrangement comprises an LCOS 402. The LCOS 402 is arranged to display a modulation pattern (or 'diffractive pattern') comprising the hologram and to project light that has been holographically encoded towards an eye 405 that comprises a pupil that acts as an aperture 404, a lens 409, and a retina (not shown) that acts as a viewing plane. There is a light source (not shown) arranged to illuminate the LCOS 402. The lens 409 of the eye 405 performs a hologram-to-image transformation. The light source may be of any suitable type. For example, it may comprise a laser light source.

The viewing system 400 further comprises a waveguide 408 positioned between the LCOS 402 and the eye 405. The presence of the waveguide 408 enables all angular content from the LCOS 402 to be received by the eye, even at the relatively large projection distance shown. This is because the waveguide 408 acts as a pupil expander, in a manner that is well known and so is described only briefly herein.

In brief, the waveguide 408 shown in Figure 4 comprises a substantially elongate formation. In this example, the waveguide 408 comprises an optical slab of refractive material, but other types of waveguides are also well known and may be used. The waveguide 408 is located so as to intersect the light cone (i.e., the diffracted light field) that is projected from the LCOS 402, for example at an oblique angle. In this example, the size, location, and position of the waveguide 408 are configured to ensure that light from each of the eight ray bundles, within the light cone, enters the waveguide 408. Light from the light cone enters the waveguide 408 via its first planar surface (located nearest the LCOS 402) and is guided at least partially along the length of the waveguide 408, before being emitted via its second planar surface, substantially opposite the first surface (located nearest the eye). As will be well understood, the second planar surface is partially reflective, partially transmissive. In other words, when each ray of light travels within the waveguide 408 from the first planar surface and hits the second planar surface, some of the light will be transmitted out of the waveguide 408 and some will be reflected by the second planar surface, back towards the first planar surface. The first planar surface is reflective, such that all light that hits it, from within the waveguide 408, will be reflected back towards the second planar surface. Therefore, some of the light may simply be refracted between the two planar surfaces of the waveguide 408 before being transmitted, whilst other light may be reflected, and thus may undergo one or more reflections, (or 'bounces') between the planar surfaces of the waveguide 408, before being transmitted.

Figure 4 shows a total of nine "bounce" points, B0 to B8, along the length of the waveguide 408. Each of the "bounce" points B1 to B8 corresponds to a respective LCOS 402'. Although light relating to all points of the image (V1-V8) as shown in Figure 2 is transmitted out of the waveguide at each "bounce" from the second planar surface of the waveguide 408, only the light from one angular part of the image (e.g. light of one of V1 to V8) has a trajectory that enables it to reach the eye 405, from each respective "bounce" point, B0 to B8. Moreover, light from a different angular part of the image, V1 to V8, reaches the eye 405 from each respective "bounce" point. Therefore, each angular channel of encoded light reaches the eye only once, from the waveguide 408, in the example of Figure 4.

Although virtual images, which require the eye to transform received modulated light in order to form a perceived image, have generally been discussed herein, the methods and arrangements described herein can be applied to real images.

### Two-Dimensional Pupil Expansion - Example 1

Whilst the arrangement shown in Figure 4 includes a single waveguide that provides pupil expansion in one dimension, pupil expansion can be provided in more than one dimension, for example in two dimensions. Moreover, whilst the example in Figure 4 uses a hologram that has been calculated to create channels of light, each corresponding to a different portion of an image, the present disclosure and the systems that are described herebelow are not limited to such a hologram type.

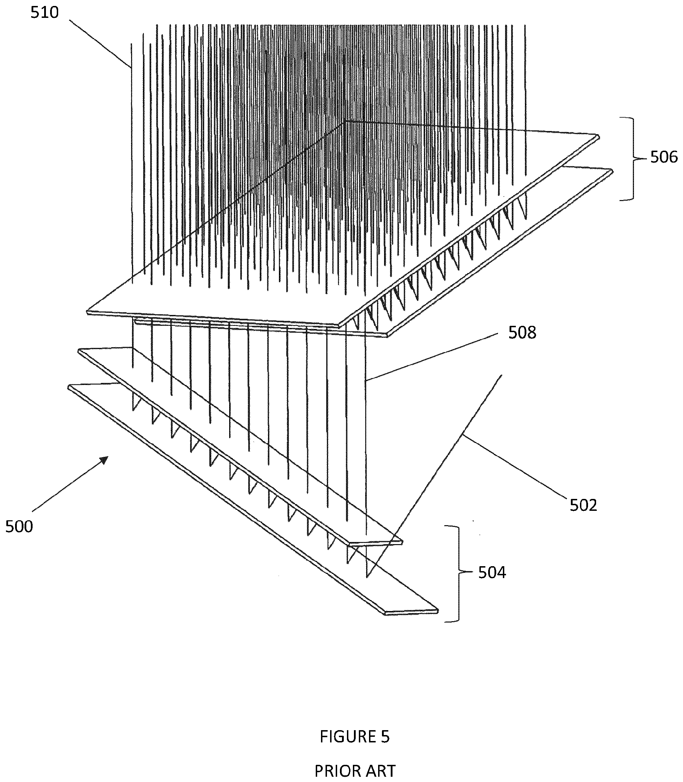

Figure 5 shows a perspective view of a system 500 comprising two replicators, 504, 506 arranged for expanding a light beam 502 in two dimensions.

In the system 500 of Figure 5, the first replicator 504 comprises a first pair of surfaces, stacked parallel to one another, and arranged to provide replication - or, pupil expansion - in a similar manner to the waveguide 408 of Figure 4. The first pair of surfaces are similarly (in some cases, identically) sized and shaped to one another and are substantially elongate in one direction. The collimated light beam 502 is directed towards an input on the first replicator 504. Due to a process of internal reflection between the two surfaces, and partial transmission of light from each of a plurality of output points on one of the surfaces (the upper surface, as shown in Figure 5), which will be familiar to the skilled reader, light of the light beam 502 is replicated in a first direction, along the length of the first replicator 504. Thus, a first plurality of replica light beams 508 is emitted from the first replicator 504, towards the second replicator 506.

The second replicator 506 comprises a second pair of surfaces stacked parallel to one another, arranged to receive each of the collimated light beams of the first plurality of light beams 508 and further arranged to provide replication - or, pupil expansion - by expanding each of those light beams in a second direction, substantially orthogonal to the first direction. The first pair of surfaces are similarly (in some cases, identically) sized and shaped to one another and are substantially rectangular. The rectangular shape is implemented for the second replicator in order for it to have length along the first direction, in order to receive the first plurality of light beams 508, and to have length along the second, orthogonal direction, in order to provide replication in that second direction. Due to a process of internal reflection between the two surfaces, and partial transmission of light from each of a plurality of output points on one of the surfaces (the upper surface, as shown in Figure 5), light of each light beam within the first plurality of light beams 508 is replicated in the second direction. Thus, a second plurality of light beams 510 is emitted from the second replicator 506, wherein the second plurality of light beams 510 comprises replicas of the input light beam 502 along each of the first direction and the second direction. Thus, the second plurality of light beams 510 may be regarded as comprising a two-dimensional grid, or array, of replica light beams.

Thus, it can be said that the first and second replicators 504, 505 of Figure 5 combine to provide a two-dimensional replicator (or, "two-dimensional pupil expander").

### Two-dimensional pupil expansion - Example 2

British patent application GB2113454.9, filed 21 September 2021 and incorporated herein by reference, discloses an image projector comprising a more advanced two-dimensional pupil expander may which be arranged in accordance with this disclosure.

The image projector may be arranged to project a diverging or diffracted light field. In some embodiments, the light field is encoded with a hologram. In some embodiments, the diffracted light field comprises diverging ray bundles. In some embodiments, the image formed by the diffracted light field is a virtual image.

In some embodiments, the first pair of parallel / complementary surfaces are elongate or elongated surfaces, being relatively long along a first dimension and relatively short along a second dimension, for example being relatively short along each of two other dimensions, with each dimension being substantially orthogonal to each of the respective others. The process of reflection/transmission of the light between/from the first pair of parallel surfaces is arranged to cause the light to propagate within the first waveguide pupil expander, with the general direction of light propagation being in the direction along which the first waveguide pupil expander is relatively long (i.e., in its "elongate" direction).

There is disclosed herein a system that forms an image using diffracted light and provides an eye-box size and field of view suitable for real-world application - e.g. in the automotive industry by way of a head-up display. The diffracted light is light forming a holographic reconstruction of the image from a diffractive structure - e.g. hologram such as a Fourier or Fresnel hologram. The use diffraction and a diffractive structure necessitates a display device with a high density of very small pixels (e.g. 1 micrometer) - which, in practice, means a small display device (e.g. 1 cm). The inventors have addressed a problem of how to provide 2D pupil expansion with a diffracted light field e.g. diffracted light comprising diverging (not collimated) ray bundles.

In some embodiments, the display system comprises a display device - such as a pixelated display device, for example a spatial light modulator (SLM) or Liquid Crystal on Silicon (LCoS) SLM - which is arranged to provide or form the diffracted or diverging light. In such aspects, the aperture of the spatial light modulator (SLM) is a limiting aperture of the system. That is, the aperture of the spatial light modulator - more specifically, the size of the area delimiting the array of light modulating pixels comprised within the SLM - determines the size (e.g. spatial extent) of the light ray bundle that can exit the system. In accordance with this disclosure, it is stated that the exit pupil of the system is expanded to reflect that the exit pupil of the system (that is limited by the small display device having a pixel size for light diffraction) is made larger or bigger or greater in spatial extend by the use of at least one pupil expander.

The diffracted or diverging light field may be said to have "a light field size", defined in a direction substantially orthogonal to a propagation direction of the light field. Because the light is diffracted / diverging, the light field size increases with propagation distance.

In some embodiments, the diffracted light field is spatially-modulated in accordance with a hologram. In other words, in such aspects, the diffractive light field comprises a "holographic light field". The hologram may be displayed on a pixelated display device. The hologram may be a computer-generated hologram (CGH). It may be a Fourier hologram or a Fresnel hologram or a point-cloud hologram or any other suitable type of hologram. The hologram may, optionally, be calculated so as to form channels of hologram light, with each channel corresponding to a different respective portion of an image that is intended to be viewed (or perceived, if it is a virtual image) by the viewer. The pixelated display device may be configured to display a plurality of different holograms, in succession or in sequence. Each of the aspects and embodiments disclosed herein may be applied to the display of multiple holograms.

The output port of the first waveguide pupil expander may be coupled to an input port of a second waveguide pupil expander. The second waveguide pupil expander may be arranged to guide the diffracted light field - including some of, preferably most of, preferably all of, the replicas of the light field that are output by the first waveguide pupil expander - from its input port to a respective output port by internal reflection between a third pair of parallel surfaces of the second waveguide pupil expander.

The first waveguide pupil expander may be arranged to provide pupil expansion, or replication, in a first direction and the second waveguide pupil expander may be arranged to provide pupil expansion, or replication, in a second, different direction. The second direction may be substantially orthogonal to the first direction. The second waveguide pupil expander may be arranged to preserve the pupil expansion that the first waveguide pupil expander has provided in the first direction and to expand (or, replicate) some of, preferably most of, preferably all of, the replicas that it receives from the first waveguide pupil expander in the second, different direction. The second waveguide pupil expander may be arranged to receive the light field directly or indirectly from the first waveguide pupil expander. One or more other elements may be provided along the propagation path of the light field between the first and second waveguide pupil expanders.

The first waveguide pupil expander may be substantially elongated and the second waveguide pupil expander may be substantially planar. The elongated shape of the first waveguide pupil expander may be defined by a length along a first dimension. The planar, or rectangular, shape of the second waveguide pupil expander may be defined by a length along a first dimension and a width, or breadth, along a second dimension substantially orthogonal to the first dimension. A size, or length, of the first waveguide pupil expander along its first dimension make correspond to the length or width of the second waveguide pupil expander along its first or second dimension, respectively. A first surface of the pair of parallel surfaces of the second waveguide pupil expander, which comprises its input port, may be shaped, sized, and/or located so as to correspond to an area defined by the output port on the first surface of the pair of parallel surfaces on the first waveguide pupil expander, such that the second waveguide pupil expander is arranged to receive each of the replicas output by the first waveguide pupil expander.

The first and second waveguide pupil expander may collectively provide pupil expansion in a first direction and in a second direction perpendicular to the first direction, optionally, wherein a plane containing the first and second directions is substantially parallel to a plane of the second waveguide pupil expander. In other words, the first and second dimensions that respectively define the length and breadth of the second waveguide pupil expander may be parallel to the first and second directions, respectively, (or to the second and first directions, respectively) in which the waveguide pupil expanders provide pupil expansion. The combination of the first waveguide pupil expander and the second waveguide pupil expander may be generally referred to as being a "pupil expander".

It may be said that the expansion/replication provided by the first and second waveguide expanders has the effect of expanding an exit pupil of the display system in each of two directions. An area defined by the expanded exit pupil may, in turn define an expanded eye-box area, from which the viewer can receive light of the input diffracted or diverging light field. The eye-box area may be said to be located on, or to define, a viewing plane.

The two directions in which the exit pupil is expanded may be coplanar with, or parallel to, the first and second directions in which the first and second waveguide pupil expanders provide replication/expansion. Alternatively, in arrangements that comprise other elements such as an optical combiner, for example the windscreen (or, windshield) of a vehicle, the exit pupil may be regarded as being an exit pupil from that other element, such as from the windscreen. In such arrangements, the exit pupil may be non-coplanar and non-parallel with the first and second directions in which the first and second waveguide pupil expanders provide replication/expansion. For example, the exit pupil may be substantially perpendicular to the first and second directions in which the first and second waveguide pupil expanders provide replication/expansion.

The viewing plane, and/or the eye-box area, may be non-coplanar or non-parallel to the first and second directions in which the first and second waveguide pupil expanders provide replication/expansion. For example, a viewing plane may be substantially perpendicular to the first and second directions in which the first and second waveguide pupil expanders provide replication/expansion.

In order to provide suitable launch conditions to achieve internal reflection within the first and second waveguide pupil expanders, an elongate dimension of the first waveguide pupil expander may be tilted relative to the first and second dimensions of the second waveguide pupil expander.

### Combiner shape compensation

An advantage of projecting a hologram to the eye-box is that optical compensation can be encoded in the hologram (see, for example, European patent EP2936252 incorporated herein by herein). The present disclosure is compatible with holograms that compensate for the complex curvature of an optical combiner used as part of the projection system. In some embodiments, the optical combiner is the windscreen of a vehicle. Full details of this approach are provided in European patent EP2936252 and are not repeated here because the detailed features of those systems and methods are not essential to the new teaching of this disclosure herein and are merely exemplary of configurations that benefit from the teachings of the present disclosure.

### Control device

The present disclosure is also compatible with optical configurations that include a control device (e.g. light shuttering device) to control the delivery of light from a light channelling hologram to the viewer. The holographic projector may further comprise a control device arranged to control the delivery of angular channels to the eye-box position. British patent application GB2108456.1, filed 14 June 2021 and incorporated herein by reference, discloses the at least one waveguide pupil expander and control device. The reader will understand from at least this prior disclosure that the optical configuration of the control device is fundamentally based upon the eye-box position of the user and is compatible with any hologram calculation method that achieves the light channeling described herein. It may be said that the control device is a light shuttering or aperturing device. The light shuttering device may comprise a 1D array of apertures or windows, wherein each aperture or window independently switchable between a light transmissive and a light non-transmissive state in order to control the delivery of hologram light channels, and their replicas, to the eye-box. Each aperture or window may comprise a plurality of liquid crystal cells or pixels.

### Light Turning Element

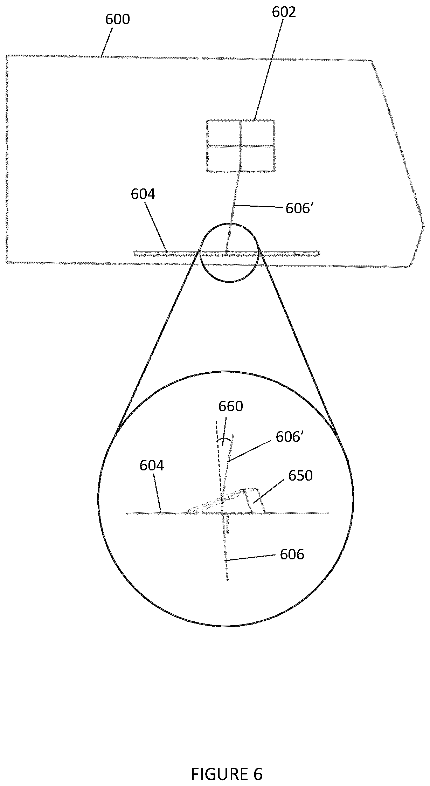

Figure 6 depicts a schematic illustration (not to scale) of a display assembly that comprises a windscreen 600 and a waveguide 604. The display assembly may be part of a display system for displaying a hologram (such a display system was described above in relation to Figure 4). The waveguide 604 is configured to output a holographic light field, and plurality of replicas thereof, towards the windscreen 600. Figure 6 shows a principal ray 606 of the holographic light field propagating towards the windscreen 600. More preferably, the waveguide 604 directs the principal ray 606 towards a target area 602 on the windscreen 600. The target area 602 may correspond to the eye-box discussed above. The principal ray 606 is a ray of a hologram to be delivered to the eye-box.

The display assembly further comprises a light turning element 650. The light turning element 650 is configured to turn or rotate a light field/ray by a turning angle 660 as that light field/ray propagates through the light turning element 650. In this embodiment, the turning angle 660 is 20. In this embodiment, the principal ray 606 propagating through the light turning element 650 is turned by the light turning element 650 through the turning angle 660. This results in a turned principal ray 606' that exits the light turning element 650 and travels towards the windscreen 600 and more preferably towards the target area 602. In other words, the propagation direction of the turned principal ray 606' is at the turning angle 660 with the propagation direction of the principal ray 606. The light turning element 650 may be positioned on a major surface of the waveguide 604 such that the light exiting the waveguide 604 enters the light turning element 650.

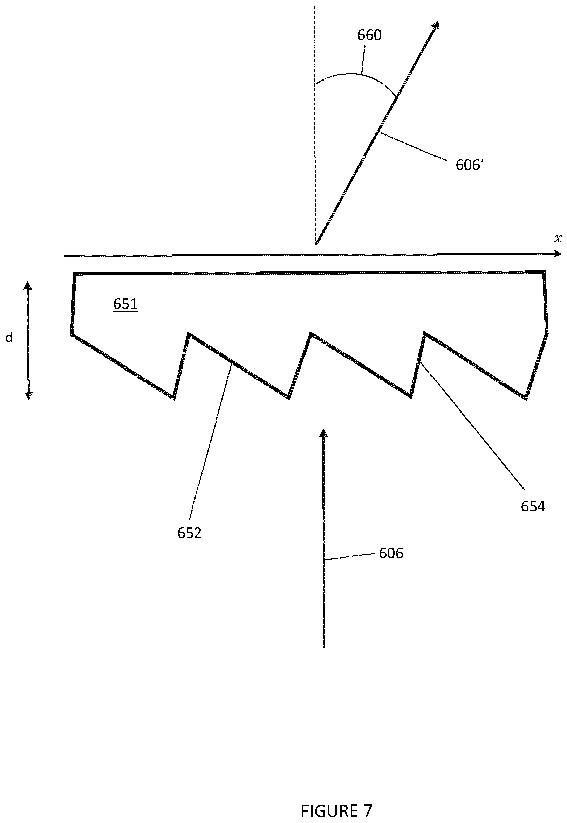

Figure 7 shows a schematic illustration (not to scale) of a conventional turning film 651 that may be used as the light turning element of the display assembly of Figure 6. The turning film 651 comprises a plurality of first portions 652, the first portions 652 being arranged in a repeating pattern that repeats in a first dimension x. Each of the first portions 652 has a thickness, d, that increases linearly along a first direction in the first dimension x. The first dimension x extends within a plane of the light turning element 650. In this embodiment, the light ray is turned by refraction owing to the light ray experiencing a change in refractive index as it enters the light turning element 650 - in a manner that will be familiar to the person skilled in the art of optics..

The turning film 651 also comprises a plurality of second portions 654, the second portions 654 being arranged in a repeating pattern that repeats in the first dimension x. Each of the second portions 654 has a thickness, d, that decreases linearly along the first direction in the first dimension x.

In this embodiment, the repeating first and second portions 652, 654 are arranged in a pattern that alternates between the first portion 652 and the second portion 654 in the first dimension x. In this way, the turning film 651 has a thickness that may be expressed as a sawtooth function of a distance in the first dimension x.

The turning film 651 is configured to perform the function of the turning element 650 discussed above, i.e. turn a light field/ray by the turning angle 660 as that light field/ray propagates through the turning film 651. As such, the principal ray 606 turns through the turning angle 660 as the principal ray 606 travels through the turning film 651, which results in the turned principal ray 606' exiting the turning film 651, as described above in relation to Figure 6. However, in use of the conventional turning film 651, the second portions 654 effectively block parts of the principal ray 606 as it propagates through the turning film 651. As such, dark bands corresponding to the positions of the second portions 654 can be perceived in some parts of the image from some eye-box positions. The second portions 654 can be referred to as passive facets.

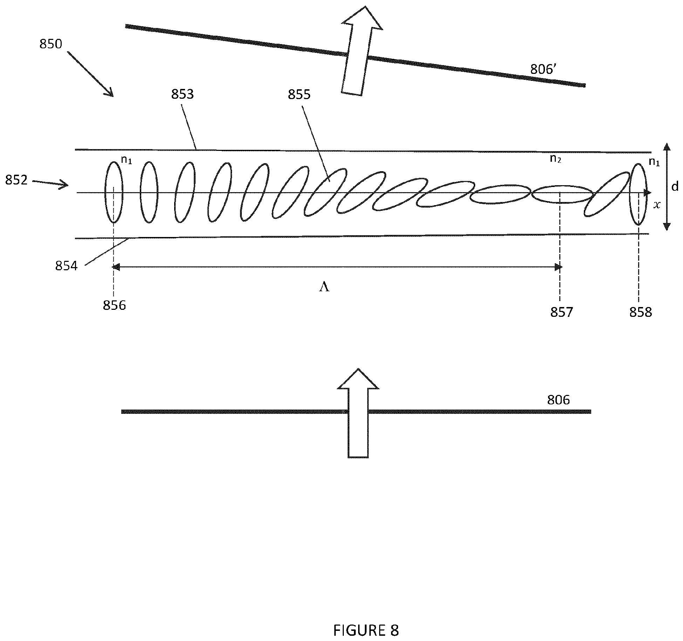

Figure 8 depicts a portion of a light turning element in accordance with an embodiment of the present disclosure. In this embodiment, the light turning element 850 comprises a film/layer of liquid crystal (LC) material 852 positioned between two substrates 853, 854.

The light turning element 850 may be used as the light turning element 650 of the display assembly depicted in Figure 6. The light turning element 850 is configured to turn the propagation path of a light field/ray 806 by a turning angle as the light field/ray 806 propagates through the light turning element 850.

The LC material 852 can be made from LC molecules 855. Typically, LC molecules 855 have elongate or rod-like shapes. In the relaxed state, the longitudinal axes of neighbouring molecules tend to align approximately in the same direction as one another. A dimensionless unit vector called the director *̅n̅*̅ is used to represent the direction of the preferred orientation of molecules in the neighbourhood of any point. In other words, absent any external stimulus, the neighbouring molecules of an aligned LC material are orientated such that their longitudinal axes are approximately parallel to the director. The layer of LC material 852 is configured such that an angle θ between a director *̅n̅*̅ of the LC material 852 and a first dimension *x* is an oscillating function of position in the first dimension *x,* wherein the first dimension *x* is a dimension within a plane of the layer of LC material 852. The refractive index of the layer of LC material 852 aligned in the above-described way changes in the first dimension *x,* which is due to the anisotropic nature of the LC molecules 855. The refractive index along the longitudinal axis of the LC molecule, nₗ, is different to the refractive index along the transverse axis of the LC molecule, nₜ. The difference between the refractive indices nₗ and nₜ is referred to as birefringence, Δn. In this embodiment, the LC material 852 is aligned homeotropically at a first position indicated by the dashed line 856 (shown by the left-most molecule in Figure 8 which is substantially perpendicular to the substrates 853, 854). A homeotropic alignment is where the director of the LC material is approximately perpendicular to one or both of the substrates 853, 854. As such, the refractive index of the LC material 852 at the first position n₁ is approximately the refractive index along a transverse axis of the LC molecule nₜ. The LC material 852 is also aligned homogenously at a second position indicated by the dashed 857 (shown by the molecule in figure 8 that is substantially parallel to the substrates 853, 854). A homogenous or planar alignment is where the director of the LC material is approximately parallel to one or both of the substrates 853, 854. As such, the refractive index of the LC material 852 at the second position n₂ is approximately the refractive index along the longitudinal axis of the LC molecule nₗ. The alignment of the LC material gradually (e.g. linearly) changes from homeotropic alignment to homogenous alignment along a first direction in the first dimension *x.* In this embodiment, the distance A between the first and second positions is 240 µm. The distance between the first and second positions is one of the parameters that determines the turning angle. Another parameter that determines the turning angle is the difference between the n₁ and n₂. For example, a turning angle of 15° can be achieved by gradually rotating the alignment of LC material 852 by an amount that provides a difference in refractive index of 0.1 from the first position to the second position. This means that, depending on the LC material 852 used, the alignment at the second position is not necessarily homogeneous and/or the alignment at the first position is not necessarily homeotropic as long as the desired difference in refractive index is achieved.

The LC material 852 is also aligned homeotropically at a third position indicated by the dashed line 858 (shown by the right-most molecule in figure 8 that is substantially perpendicular to the substrates 853, 854). The alignment of the LC material 852 gradually changes from homogeneous alignment back to homeotropic alignment along the first direction in the first dimension *x.* The alignment of the LC material 852 at the third position can be the same as the alignment at the first position.

The distance between the second and third positions is small relative to the distance between the first and second positions, i.e. the distance over which the alignment transitions from homogenous back to homeotropic is small relative to the distance over which the alignment transitions from homeotropic to homogeneous. In some embodiments, the distance between the first and second positions (which can be referred to as the blaze length) is 150 µm and the distance between the second and third positions is 10 µm which is a relatively small fraction of the blaze length. The region between the second and third positions would cause scattering instead of dark bands and as such dark bands tend to be avoided. This is because the LC director *̅n̅*̅ is rotating within a relatively short distance. In this embodiment, in the portion depicted in Figure 8, the effective refractive index of the LC material 852 experienced by the received light, represented by principal ray 606, gradually (e.g. linearly) changes from n₁ (at the first position) to n₂ (at the second position). The portion depicted in Figure 8 repeats multiple times (dependent on application) in the first dimension *x,* according to an oscillating function, e.g. a periodic function such as a sawtooth function, which results in a light turning element which may be used in the display assembly shown in Figure 6. In other words, the entire light turning element is continuously transitioning between the two states (i.e. the alignment at the first position and the alignment at the second position). Such a light turning element has an effective refractive index that alternates along the first dimension *x* between n₁ and n₂ in a sawtooth pattern. Light propagates according to the component of the refractive index which is parallel to the light polarisation vector.

In this embodiment, the distance between the first and third positions is 250 µm. The distance between the first and third positions can be considered the period of the oscillating function discussed above. In this embodiment, the thickness d of the layer of LC material is 300 µm. In this embodiment, the birefringence Δn of the liquid crystal material is 0.3.

An embodiment is described in the following by way of example only of one method of fabricating the liquid crystal light turning element of the present disclosure. To fabricate the light turning element 850 depicted in figure 8, a layer of photoalignment material is first deposited on a substrate. The photoalignment material may be made from azobenzene-based polymers, azobenzene-containing polymers, or azobenzene-functionalised polymers. A photo mask may then be positioned over the photoalignment material exposing a first portion of the photoalignment material. The position of the first portion corresponds to the first position discussed above. The exposed first portion of the photoalignment material is irradiated with electromagnetic radiation having a first polarization angle. The irradiation of the first portion causes the first portion of the photoalignment material to polymerize with a structure that induces homeotropic alignment in LC materials deposited thereon.

A second portion of the photoalignment material may be exposed using the same or a different photo mask. The position of the second portion corresponds to the second position discussed above. The exposed second portion of the photoalignment material is irradiated with electromagnetic radiation having a second polarization angle that is different to the first polarization angle. The irradiation of the second portion causes the second portion of the photoalignment material to polymerize with a structure that induces homogeneous alignment in LC materials deposited thereon.

The alignment procedures of the first and second portions of the photoalignment material define the extremes. The photoalignment procedure is adjusted accordingly so that the orientation of the director *̅n̅*̅ varies smoothly across the blaze portion, i.e. the portion between the first and second portions, of the light turning element. This may be achieved by varying smoothly the polarization angle of the electromagnetic radiation irradiating the photoalignment layer scanning from the first portion to the second portion. The dark bands that are associated with the passive facet in a conventional turning film, where the rays are deflected out of the projection path, will not occur with a smoothly varying birefringence grating achieved by a light turning element fabricated in the above-described way.

A third portion of the photoalignment material may be treated similarly to the first portion, i.e. exposed and irradiated in the same ways as the first portion. A fourth portion of the photoalignment material may be treated similarly to the second portion, i.e. exposed and irradiated in the same ways as the second portion. The irradiated portions of the photoalignment material are arranged such that a layer of LC material deposited thereon would have the configuration of the layer of LC material 850 discussed above. By precisely controlling the polarization angle of the irradiation, the alignment of the polymerisation of the alignment material may be controlled.

The light turning element 850 may be fabricated using two substrates, each having a photoalignment material that has undergone the above-described treatment. The substrates are arranged such that the corresponding portions of photoalignment materials are positioned facing each other, e.g. portions with homeotropic alignment face each other and portions with homogenous alignments face each other. A liquid crystal material may then be deposited in-between the two substrates thereby arriving at the light turning element 850 described above.

A polymerizable material comprising monomers may be mixed or dispersed with the LC material deposited between the substrates. The polymerizable material may then be polymerized thereby forming a polymer matrix (e.g. PDLC or polymer network) interspersed with the LC material. The alignment of the LC material is effectively "frozen" by the polymer matrix. This is because the polymer matrix tends to be more rigid than the LC material. As such, the LC material is restricted by the polymer matrix to be in the orientation where the angle between the director of the liquid crystal material and the first dimension is an oscillating function of position in the first dimension. This in turn means that the LC material and the orientation thereof are stabilized by the polymer matrix. This may result in an increase of the temperature range of the LC phase.

In some embodiments, the photoalignment material may be a Reactive Mesogen (RM). RMs are polymerisable liquid crystals that can be formed, through the process of in-situ photopolymerisation, into thin birefringent films. RMs may be used as photoalignment film/material in the alignment of LC materials. The alignment caused by the RMs results from the anisotropic dimerization of side fragments at irradiation with polarised UV light. In these embodiments, the RM material exposed to UV will remain homogenously aligned (i.e. causes homogenous alignment of an LC material deposited thereon) and RM material not exposed to UV will have homeotropic alignment (i.e. causes homeotropic alignment of the LC material deposited thereon). In these embodiments, the irradiation may be done via an interferometer which would produce dark and bright fringes according to the repeating pattern or using SLM which could expose grating on the substrate.

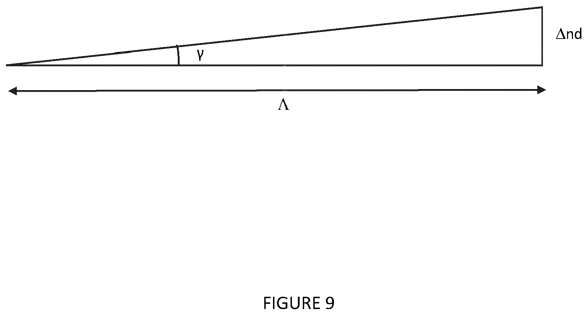

Figure 9 depicts a schematic illustration (not to scale) of a turning prism equivalent to the light turning element shown in Figure 8. The light turning element 850 discussed above in relation to Figure 8 may be equated to a turning prism. That effective turning prism has a blaze angle, y, of 20°. The blaze angle of a turning prism is equivalent to the turning angle. For a conventional turning film, the blaze angle will be larger than the turning angle due to refraction at the blaze facets.

### Additional features

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims.

## Claims

1. A display system configured to produce a holographic head-up display image, the display system comprising:
a light source arranged to output a light field corresponding to a hologram of the holographic head-up display image; and
a light guide assembly comprising:
a waveguide (604); and
a light turning element (850) comprising a layer of liquid crystal material (852), the layer of liquid crystal material (852) defining a plane, the layer of liquid crystal material (852) configured such that an angle (θ) between a director (*̅n̅*̅) of the liquid crystal material (852) and a first dimension (*x*) changes as a function of position in the first dimension (*x*), wherein the first dimension (*x*) is a dimension within the plane;
wherein the light turning element (850) is coupled to a major surface of the waveguide (604) and the light turning element (850) is configured to change a propagation direction of a light field received from the waveguide (604); and
wherein the light guide assembly is arranged to receive the light field from the light source.

2. The display system of claim 1, wherein the angle (θ) between the director (*̅n̅*̅) and the first dimension (*x*) of the light turning element (850) changes as an oscillating function.

3. The display system of claim 2, wherein the angle (θ) between the director (*̅n̅*̅) and the first dimension (*x*) of the light turning element (850) is an oscillating function, optionally wherein the oscillating function is a periodic function, further optionally wherein the periodic function is a function selected from the group of functions consisting of: a sawtooth function, a square function, a triangle function, and a trigonometric function; and / or wherein a period of the periodic function is between 5 to 5000 microns.

4. The display system of any preceding claim, wherein a size of the layer of liquid crystal material (852) of the light turning element (850) in a direction that is perpendicular to the plane is between 10 and 5000 microns; and / or wherein a birefringence of the liquid crystal material (852) is between 0.10 and 0.40.

5. The display system of any preceding claim, the light turning element (850) further comprising a polymer matrix interspersed with the layer of liquid crystal material (852).

6. The display system of claim 5, wherein the polymer matrix is more rigid than the liquid crystal material (852), and / or wherein:
the polymer matrix comprises a plurality of cavities; and
the liquid crystal material (852) is located within the cavities.

7. The display system of any preceding claim, wherein a refractive index of the layer of liquid crystal material (852) of the light turning element (850) oscillates along the first dimension (*x*) and the refractive index is in a direction perpendicular to the plane.

8. The display system of claim 1, wherein the light turning element (850) is disposed on or abuts the major surface of the waveguide (604).

9. The display system of claim 1 or 8, wherein the light field comprises coherent light.

## Patentansprüche

1. Anzeigesystem, das so konfiguriert ist, dass es ein holografisches Head-up-Displaybilds erzeugt, wobei das Anzeigesystem Folgendes umfasst:
eine Lichtquelle, die so angeordnet ist, dass sie ein Lichtfeld ausgibt, das einem Hologramm des holografischen Head-up-Displaybilds entspricht; und
eine Lichtleiteranordnung, umfassend:
einen Wellenleiter (604); und
ein Lichtumlenkelement (850), das eine Schicht aus Flüssigkristallmaterial (852) umfasst, wobei die Schicht aus Flüssigkristallmaterial (852) eine Ebene definiert und die Schicht aus Flüssigkristallmaterial (852) so konfiguriert ist, dass sich ein Winkel (θ) zwischen einem Direktor (*̅n̅*̅) des Flüssigkristallmaterials (852) und einer ersten Dimension (*x*) als Funktion der Position in der ersten Dimension (*x*) ändert, wobei die erste Dimension (*x*) eine Dimension innerhalb der Ebene ist;
wobei das Lichtumlenkelement (850) mit einer Hauptfläche des Wellenleiters (604) gekoppelt ist und das Lichtumlenkelement (850) so konfiguriert ist, dass sich eine Ausbreitungsrichtung eines vom Wellenleiter (604) empfangenen Lichtfelds ändert; und
wobei die Lichtleiteranordnung so angeordnet ist, dass sie das Lichtfeld von der Lichtquelle empfängt.

2. Anzeigesystem nach Anspruch 1, wobei sich der Winkel (θ) zwischen dem Direktor (*̅n̅*̅) und der ersten Dimension (*x*) des Lichtumlenkelements (850) als oszillierende Funktion ändert.

3. Anzeigesystem nach Anspruch 2, wobei der Winkel (θ) zwischen dem Direktor (*̅n̅*̅) und der ersten Dimension (*x*) des Lichtumlenkelements (850) eine oszillierende Funktion ist, wobei die oszillierende Funktion optional eine periodische Funktion ist, wobei die periodische Funktion weiter optional eine Funktion ist, die ausgewählt ist aus der Gruppe bestehend aus: einer Sägezahnfunktion, einer Quadratfunktion, einer Dreieckfunktion und einer trigonometrischen Funktion; und/oder wobei eine Periode der periodischen Funktion zwischen 5 und 5000 Mikrometern beträgt.

4. Anzeigesystem nach einem vorstehenden Anspruch, wobei eine Größe der Schicht aus Flüssigkristallmaterial (852) des Lichtumlenkelements (850) in einer Richtung senkrecht zur Ebene zwischen 10 und 5000 Mikrometer beträgt; und/oder wobei eine Doppelbrechung des Flüssigkristallmaterials (852) zwischen 0,10 und 0,40 beträgt.

5. Anzeigesystem nach einem vorstehenden Anspruch, wobei das Lichtumlenkelement (850) weiter eine Polymermatrix umfasst, die mit der Schicht aus Flüssigkristallmaterial (852) durchsetzt ist.

6. Anzeigesystem nach Anspruch 5, wobei die Polymermatrix steifer ist als das Flüssigkristallmaterial (852), und/oder wobei:
die Polymermatrix eine Vielzahl von Hohlräumen aufweist;
und das Flüssigkristallmaterial (852) innerhalb der Hohlräume gelegen ist.

7. Anzeigesystem nach einem vorstehenden Anspruch, wobei ein Brechungsindex der Schicht aus Flüssigkristallmaterial (852) des Lichtumlenkelements (850) entlang der ersten Dimension (*x*) oszilliert und der Brechungsindex in einer Richtung senkrecht zur Ebene liegt.

8. Anzeigesystem nach Anspruch 1, wobei das Lichtumlenkelement (850) auf der Hauptfläche des Wellenleiters (604) angeordnet ist oder an dieser anliegt.

9. Anzeigesystem nach Anspruch 1 oder 8, wobei das Lichtfeld kohärentes Licht umfasst.

## Revendications

1. Système d'affichage configuré pour produire une image d'affichage tête haute holographique, le système d'affichage comprenant :
une source de lumière agencée pour émettre un champ lumineux correspondant à un hologramme de l'image d'affichage tête haute holographique ; et
un ensemble de guide de lumière comprenant :
un guide d'ondes (604) ; et
un élément de rotation de lumière (850) comprenant une couche de matériau à cristaux liquides (852), la couche de matériau à cristaux liquides (852) définissant un plan, la couche de matériau à cristaux liquides (852) étant configurée de sorte qu'un angle (θ) entre un directeur (*̅n̅*̅) du matériau à cristaux liquides (852) et une première dimension (*x*) change en fonction de la position dans la première dimension (*x*), dans lequel la première dimension (*x*) est une dimension à l'intérieur du plan ;
dans lequel l'élément de rotation de lumière (850) est couplé à une surface principale du guide d'ondes (604) et l'élément de rotation de lumière (850) est configuré pour changer une direction de propagation d'un champ lumineux reçu du guide d'ondes (604) ; et
dans lequel l'ensemble de guide de lumière est agencé pour recevoir le champ lumineux de la source de lumière.

2. Système d'affichage selon la revendication 1, dans lequel l'angle (θ) entre le directeur (*̅n̅*̅) et la première dimension (*x*) de l'élément de rotation de lumière (850) change comme une fonction oscillante.

3. Système d'affichage selon la revendication 2, dans lequel l'angle (θ) entre le directeur (*̅n̅*̅) et la première dimension (x) de l'élément de rotation de lumière (850) est une fonction oscillante, éventuellement dans lequel la fonction oscillante est une fonction périodique, éventuellement en outre dans lequel la fonction périodique est une fonction sélectionnée dans le groupe de fonctions constitué de : une fonction en dents de scie, une fonction carrée, une fonction triangulaire et une fonction trigonométrique ; et/ou dans lequel une période de la fonction périodique est comprise entre 5 et 5 000 micromètres.

4. Système d'affichage selon une quelconque revendication précédente, dans lequel une taille de la couche de matériau à cristaux liquides (852) de l'élément de rotation de lumière (850) dans une direction qui est perpendiculaire au plan est comprise entre 10 et 5 000 micromètres ; et/ou dans lequel une biréfringence du matériau à cristaux liquides (852) est comprise entre 0,10 et 0,40.

5. Système d'affichage selon une quelconque revendication précédente, l'élément de rotation de lumière (850) comprenant en outre une matrice polymère intercalée avec la couche de matériau à cristaux liquides (852).

6. Système d'affichage selon la revendication 5, dans lequel la matrice polymère est plus rigide que le matériau à cristaux liquides (852), et/ou dans lequel :
la matrice polymère comprend une pluralité de cavités ;
et le matériau à cristaux liquides (852) est situé à l'intérieur des cavités.

7. Système d'affichage selon une quelconque revendication précédente, dans lequel un indice de réfraction de la couche de matériau à cristaux liquides (852) de l'élément de rotation de lumière (850) oscille le long de la première dimension (*x*) et l'indice de réfraction est dans une direction perpendiculaire au plan.

8. Système d'affichage selon la revendication 1, dans lequel l'élément de rotation de lumière (850) est disposé sur la surface principale du guide d'ondes (604) ou bute contre celle-ci.

9. Système d'affichage selon la revendication 1 ou 8, dans lequel le champ lumineux comprend une lumière cohérente.
